# DEMANDE DE BREVET EUROPEEN

(11) **EP 1 777 126 A1**
(43) Date de publication de la demande: **25.04.2007**
(21) Numéro de dépôt: 06301047.4
(22) Date de dépôt: 13.10.2006
(51) Int. Cl.: B60R 21/34

(54) **Véhicule automobile adapté à l'absorption d'un choc piéton**

(30) Priorité: 18.10.2005 FR 0510578
(71) Demandeur: Renault s.a.s., 92100 Boulogne Billancourt (FR)
(72) Inventeur: Fumex, Michel, 78460 Chevreuse (FR); Japiot, Paul, 92100 Boulogne-Billancourt (FR); Noel, Gilles, 78720 Saint-Forget (FR)
(74) Mandataire: Davies, Owen Robert Treharne

(57) **Abrégé**

L'invention concerne un véhicule automobile comprenant une caisse, ladite caisse présentant une partie avant et une partie centrale, la partie centrale comprenant un habitacle (16), ladite partie avant et ledit habitacle étant séparés par un tablier (20) transversal, ledit tablier comportant une traverse inférieure (22) de baie, ladite partie centrale comportant un pare-brise (14) qui prend appui sur ladite traverse (22) inférieure de baie et ladite partie avant comportant un capot (12), ledit capot présentant une bordure arrière (30) déformable terminée par un bord (32) qui longe à distance ledit pare-brise (14), ladite bordure arrière (30) déformable et ledit pare-brise (14) définissant une paroi susceptible de se déformer sous l'impact d'un projectile ; selon l'invention ladite bordure arrière (30) recouvre à distance ladite traverse inférieure (22) rigide de baie de façon à augmenter les capacités de déformation de ladite paroi lorsque ledit projectile heurte ladite paroi.

## Description

La présente invention concerne un véhicule automobile permettant d'absorber l'énergie produite par l'impact d'un projectile et notamment par un choc piéton.

De manière connue, les véhicules automobiles comprennent une caisse, qui présente une partie avant dans laquelle est logé un groupe motopropulseur, une partie arrière formant coffre et une partie centrale dans laquelle s'étend l'habitacle. La partie avant et la partie centrale sont séparées l'une de l'autre par un tablier transversal, ce tablier comportant une traverse inférieure de baie sur laquelle vient s'appuyer la partie inférieure d'un pare-brise. Ce pare-brise est incliné, de la partie avant vers la partie centrale et délimite une partie de l'habitacle.

La partie avant comprend en outre un capot qui recouvre le groupe motopropulseur, ce capot présentant une bordure arrière déformable qui se termine par un bord longeant le pare-brise.

Usuellement, ledit bord et la traverse inférieure de baie sur laquelle vient s'appuyer le pare-brise, sont espacés l'un de l'autre suivant un plan horizontal, et la gouttière transversale est ajustée à l'aplomb, entre le capot et le pare-brise pour recueillir l'eau qui s'écoule le long du pare-brise.

Le capot est généralement déformable, pour peu qu'on y exerce une pression suffisamment importante ou qu'il reçoive un projectile et le pare-brise l'est tout autant avec des conséquences différentes et souvent irréversibles pour lui. Aussi, en cas de choc piéton, survenant dans la partie avant, généralement lorsque le véhicule est en fonctionnement normal, le capot est lui susceptible de se déformer lorsqu'il reçoit le piéton et la pare-brise est susceptible de se rompre. Dans les deux cas et dans une certaine mesure, le choc est amorti et l'état du piéton sensiblement préservé.

En revanche, lorsque la tête du piéton par exemple, heurte le bord du pare-brise en appui contre la traverse inférieure de baie, qui elle constitue un point rigide, aucune déformation ne se produit de telle sorte que l'énergie d'impact n'est pas absorbée et que la tête n'est pas préservée.

Un problème qui se pose alors et que vise à résoudre la présente invention, est de fournir un véhicule automobile, dont la partie avant permet en cas de choc piéton, de préserver l'état dudit piéton en toute circonstance, et ce, en absorbant l'énergie d'impact, sans pour autant amoindrir la résistance mécanique de la caisse.

Dans le but de résoudre ce problème, la présente invention propose un véhicule automobile comprenant une caisse, ladite caisse présentant une partie avant et une partie centrale, ladite partie avant recevant un groupe motopropulseur et la partie centrale comprenant un habitacle, ladite partie avant et ledit habitacle étant séparés par un tablier sensiblement transversal, ledit tablier comportant une traverse inférieure rigide de baie, ladite partie centrale comportant un pare-brise frangible qui prend appui sur ladite traverse inférieure rigide de baie et ladite partie avant comportant un capot qui recouvre ledit groupe motopropulseur, ledit capot présentant une bordure arrière déformable terminée par un bord qui longe à distance ledit pare-brise, ladite bordure arrière déformable et ledit pare-brise définissant une paroi susceptible de se déformer sous l'impact d'un projectile ; selon l'invention, ladite bordure arrière recouvre à distance ladite traverse inférieure rigide de baie de façon à augmenter les capacités de déformation de ladite paroi lorsque ledit projectile heurte ladite paroi.

Ainsi, les caractéristiques de l'invention réside dans les positions relatives de la bordure arrière, du pare-brise et de son point d'appui la traverse inférieure rigide, qui se trouve précisément sous la bordure arrière du capot, et à distance de celle-ci de telle sorte, que tout corps projeté contre la partie avant du véhicule automobile, et notamment contre la paroi formé par la bordure arrière et le pare-brise qui la prolonge, est susceptible de provoquer à la fois la déformation de la bordure arrière et l'éclatement du pare-brise, et par conséquent l'absorption au moins partielle de l'énergie de l'impact sans rencontrer de point dur. En effet, en cas de choc piéton, si la tête dudit piéton venait à percuter simultanément la bordure arrière du capot et le pare-brise, elle serait sensiblement amortie grâce à la déformation de la bordure arrière du capot qui pourrait venir alors en appui sur la traverse inférieure rigide et éventuellement grâce à l'éclatement du pare-brise qui absorberait lui aussi une partie de l'énergie d'impact.

Selon un mode de mise en oeuvre de l'invention particulièrement avantageux, ledit bord et ledit pare-brise laisse apparaître un espace, et ladite bordure arrière déformable est prolongée au-delà dudit bord par une bande flexible transversale pour réduire ledit espace. Ainsi, l'espace apparent entre le capot et le pare-brise qui est d'une part inesthétique et d'autre part, qui favorise l'entrée des débris et des poussières, est au moins partiellement obturée par la bande flexible transversale. En outre, grâce à sa flexibilité, cette bande permet également d'absorber de l'énergie en cas de choc piéton.

En outre, et selon un mode de réalisation de l'invention préférentielle, le tablier est équipé d'une gouttière transversale qui s'étend sensiblement à l'aplomb dudit bord dudit capot et de ladite traverse inférieure de façon à recueillir l'eau qui s'écoule le long dudit pare-brise et à la canaliser pour éviter qu'elle ne pénètre sous le capot vers le groupe motopropulseur. En outre, cette gouttière transversale permet également de récupérer les poussières et les débris qui s'accumulent à la jonction entre le capot et le pare-brise.

De plus, ladite gouttière présentant deux bords opposés, l'un desdits bords étant orienté vers ledit habitacle, tandis que l'autre desdits bords est orienté vers ledit groupe motopropulseur, ladite gouttière est équipée avantageusement, d'une tablette inclinée pour guider l'eau vers ladite gouttière, ladite tablette présentant un premier bord monté articulé sur le bord de la gouttière orienté vers ledit groupe motopropulseur et un second bord monté glissant sous ladite bordure. De la sorte, en cas de choc, si la bordure arrière est déformée et entraînée vers la traverse inférieure rigide, la tablette pivote autour du bord de la gouttière tandis que son autre bord glisse à l'intérieur du capot.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en section verticale longitudinale d'une portion de partie avant d'un véhicule automobile conforme à l'invention, dans un premier état ;
- la Figure 2 une vue schématique du véhicule automobile illustré sur la Figure 1, dans un second état.

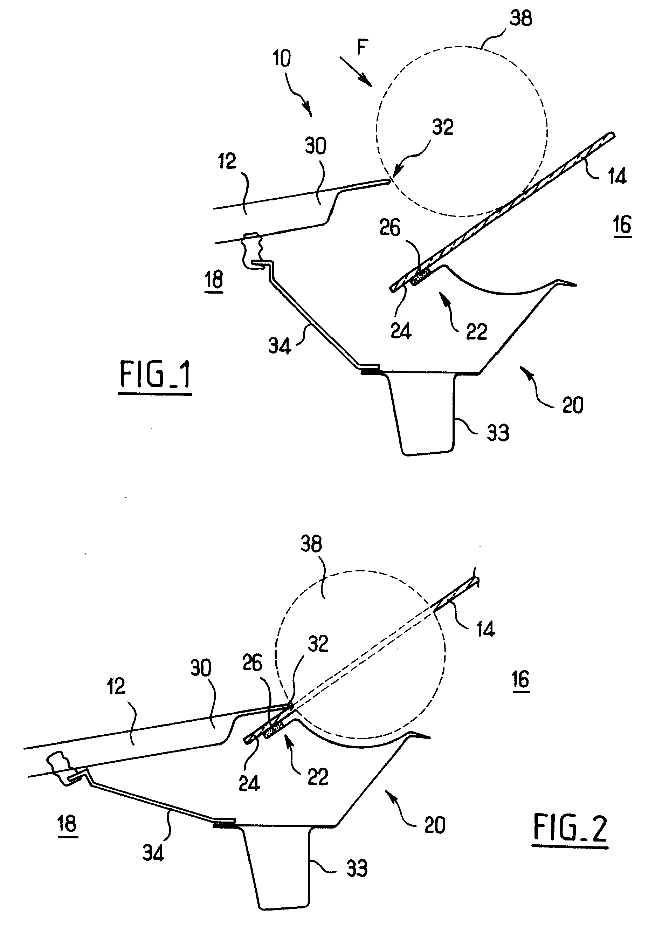

La Figure 1 illustre une portion 10 de partie avant de véhicule automobile, située à la jonction entre un capot 12, par exemple en matériau métallique déformable, et un pare-brise 14, frangible par nature. Le pare-brise 14 délimite partiellement un habitacle 16 et le capot recouvre un groupe motopropulseur 18, les deux étant séparés par un tablier 20 qui lui, présente une traverse inférieure de baie 22 contre laquelle vient prendre appui un bord inférieur 24 du pare-brise. Ce bord inférieur 24 est collé sur la traverse inférieure de baie 22 par un joint de colle 26.

Le capot 12 présente une bordure arrière 30 qui remonte vers ledit pare-brise 14 et qui se termine par un bord 32 situé à distance du pare-brise 14. La bordure arrière 30 recouvre à distance la traverse inférieure de baie 22 et par conséquent le bord inférieur 24 du pare-brise, ce dernier s'enfonçant plus profondément entre le capot et le tablier 20 par rapport aux véhicules automobiles conformes à l'art antérieur.

En outre, une gouttière transversale 33 est étendue à l'aplomb du bord 32 et du bord inférieur 24 du pare-brise 14 pour récupérer notamment l'eau qui ruisselle sur le pare-brise 14. Cette gouttière transversale 33 est reliée en dessous du capot 12 par une tablette inclinée 34 qui est montée pivotante sur le bord de la gouttière transversale 33 et glissante sous le capot 12.

Ainsi, la bordure arrière 30 et le pare-brise 14 constituent une paroi, de laquelle la traverse inférieure de baie 22 qui constitue par nature un point dur, adapté à recevoir en appui le bord inférieur 24 du pare-brise, est relativement écartée sous la bordure arrière 30. De la sorte, au cours d'un choc piéton durant lequel la tête dudit piéton ici symbolisée par une sphère rigide 38, vient en appui à la fois contre le pare-brise 14 et contre le bord 32 et ce, avant toute mise en oeuvre des moyens l'absorption d'énergie, la traverse inférieure de baie 22 rigide est relativement éloignée de la sphère rigide 38 et n'est pas directement en portée contre elle. En conséquence, durant les premiers instants de l'impact, la sphère rigide 38 est susceptible de déformer à la fois avec la bordure arrière 30 qui est elle bien déformable compte tenu de sa nature, et de rompre le pare-brise qui lui est frangible sans que la course de la sphère rigide 38 ne soit immédiatement interrompue ce qui, dans le cas contraire et dans une certaine mesure, pourrait occasionner des dégâts de la sphère rigide 38.

La course de la sphère rigide 38 selon la direction orientée par la flèche F, est néanmoins stoppée, ainsi que l'illustre la Figure 2, lorsque la sphère rigide 38, entraînée par son inertie, déforme la bordure arrière 30 du capot qui en pivotant vient en appui contre la traverse inférieure de baie 22 et brise le pare-brise 14. Ainsi, la rupture du pare-brise 14 et la déformation simultanée de la bordure arrière 30 durant la course de la sphère rigide 38 absorbe une quantité d'énergie suffisante pour préserver l'intégrité de cette sphère 38 et par voie de conséquence, la tête d'un éventuel piéton.

En outre, en déformant la bordure arrière 30, la sphère rigide 38 a provoqué le pivotement de la tablette 34 autour du bord de la gouttière transversale 33 et le glissement du bord opposé de la tablette 34 sous le capot 12.

## Revendications

1. Véhicule automobile comprenant une caisse, ladite caisse présentant une partie avant et une partie centrale, ladite partie avant recevant un groupe motopropulseur (18) et la partie centrale comprenant un habitacle (16), ladite partie avant et ledit habitacle étant séparés par un tablier (20) sensiblement transversal, ledit tablier comportant une traverse inférieure (22) rigide de baie, ladite partie centrale comportant un pare-brise frangible (14) qui prend appui sur ladite traverse (22) inférieure rigide de baie et ladite partie avant comportant un capot (12) qui recouvre ledit groupe motopropulseur (18), ledit capot présentant une bordure arrière (30) déformable terminée par un bord (32) qui longe à distance ledit pare-brise (14), ladite bordure arrière (30) déformable et ledit pare-brise (14) définissant une paroi susceptible de se déformer sous l'impact d'un projectile ;
**caractérisé en ce que** ladite bordure arrière (30) recouvre à distance ladite traverse inférieure (22) rigide de baie de façon à augmenter les capacités de déformation de ladite paroi;
et **en ce que** ledit projectile est apte à déformer la bordure arrière (30) du capot qui en pivotant vient en appui contre la traverse inférieure de baie (22) (page 5, I. 18-20) lorsque ledit projectile heurte ladite paroi.

2. Véhicule automobile selon la revendication 1, **caractérisé en ce que**, ladite bordure arrière (30) du capot est apte à briser ledit pare-brise (14) lorsqu'elle vient en appui contre la traverse inférieure de baie (22) (page 5, I. 18-20).

3. Véhicule automobile selon la revendication 1 ou 2, **caractérisé en ce que**, ledit bord (32) et ledit pare-brise (14) laisse apparaître un espace, et **en ce que** ladite bordure arrière (30) déformable est prolongée au-delà dudit bord (32) par une bande flexible transversale pour réduire ledit espace.

4. Véhicule automobile selon l'une quelconque des revendications 1 à 3, **caractérisé en ce que** le tablier (20) est équipé d'une gouttière transversale (33) qui s'étend sensiblement à l'aplomb dudit bord (32) dudit capot (12) et de ladite traverse inférieure (22) de façon à recueillir l'eau qui s'écoule le long dudit pare-brise (14).

5. Véhicule automobile selon la revendication 4, **caractérisé en ce que**, ladite gouttière (33) présentant deux bords opposés, l'un desdits bords étant orienté vers ledit habitacle (16), tandis que l'autre desdits bords est orienté vers ledit groupe motopropulseur (18), et **en ce que** ladite gouttière (33) est équipée d'une tablette (34) inclinée pour guider l'eau vers ladite gouttière, ladite tablette (34) présentant un premier bord monté articulé sur le bord de la gouttière (33) orienté vers ledit groupe motopropulseur (18) et un second bord monté glissant sous ladite bordure (30).
